# DEMANDE DE BREVET EUROPEEN

(11) **EP 2 392 488 A1**
(43) Date de publication de la demande: **07.12.2011**
(21) Numéro de dépôt: 11168108.6
(22) Date de dépôt: 30.05.2011
(51) Int. Cl.: B60N 2/20, B60N 2/30, B60N 2/58, B60N 2/70

(54) **Siège de véhicule automobile**

(30) Priorité: 01.06.2010 FR 1002323
(71) Demandeur: CENTRE D'ETUDE ET DE RECHERCHE POUR L'AUTOMOBILE (CERA), 51100 Reims (FR)
(72) Inventeur: Georges, Laurent, 08190 Roizy (FR)
(74) Mandataire: Sayettat, Julien Christian

(57) **Abrégé**

L'invention concerne un siège (1) de véhicule automobile comprenant une assise (2) et un dossier (3) monté en rotation par un dispositif (4) d'articulation, ledit dispositif étant agencé pour permettre le rabattement dudit dossier en position sensiblement horizontale, ledit dispositif saillant de ladite assise lorsque ledit dossier est rabattu, ledit dossier comprenant un coussin (5) de garniture, ledit coussin comprenant un bloc (6) de mousse revêtu d'une coiffe (7) comprenant une cavité (8) latérale inférieure de logement dudit dispositif lorsque ledit dossier est rabattu, ladite cavité étant pourvue d'une ouverture (9) tournée vers l'avant d'introduction dudit dispositif dans ladite cavité lors du rabattement dudit dossier, ladite ouverture étant occultée par une bavette (10) de revêtement pourvue d'une sous couche (11) de matériau élastique, ladite bavette comprenant un premier bord (12) solidaire de ladite coiffe et un deuxième bord (13) opposé, ladite bavette étant mobile entre une première position correspondant au non rabattement dudit dossier où ladite bavette n'est pas mise en contrainte et où ledit deuxième bord définit avec ladite coiffe une fente (14), et une deuxième position correspondant au rabattement dudit dossier où ladite bavette est ouverte par appui dudit dispositif contre elle.

## Description

L'invention concerne un siège de véhicule automobile, un coussin d'un tel siège, une coiffe d'un tel coussin et un procédé de réalisation d'un tel coussin.

Il est connu de réaliser un siège de véhicule automobile comprenant une assise et un dossier monté en rotation par un dispositif d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin de garniture, ledit coussin comprenant un bloc de mousse de rembourrage revêtu d'une coiffe de revêtement.

Le fait que le dispositif soit saillant de l'assise vers le haut lorsque le dossier est rabattu est notamment observé lorsque la cinématique de rabattement entraîne un mouvement de l'assise vers le bas, ceci afin d'agrandir l'espace de chargement du véhicule.

Lors du rabattement du dossier contre l'assise, le dispositif d'articulation est susceptible d'interférer avec le volume du coussin de dossier au niveau d'un coin inférieur dudit coussin.

C'est pourquoi on prévoit usuellement de réaliser en partie angulaire inférieure du coussin de dossier un évidement permettant de loger le dispositif lorsque le dossier est rabattu.

Une telle réalisation peut présenter une esthétique discutable dans la mesure où l'évidement est apparent.

L'invention a pour but de pallier cet inconvénient.

A cet effet, et selon un premier aspect, l'invention propose un siège de véhicule automobile comprenant une assise et un dossier monté en rotation par un dispositif d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin de garniture, ledit coussin comprenant un bloc de mousse de rembourrage revêtu d'une coiffe de revêtement, ledit coussin comprenant une cavité latérale inférieure de logement dudit dispositif lorsque ledit dossier est rabattu, ladite cavité étant pourvue d'une ouverture tournée vers l'avant d'introduction dudit dispositif dans ladite cavité lors du rabattement dudit dossier, ladite ouverture étant occultée par une bavette de revêtement pourvue d'une sous couche de matériau élastique, ladite bavette comprenant un premier bord solidaire de ladite coiffe et un deuxième bord opposé, ladite bavette étant mobile entre :
- une première position correspondant au non rabattement dudit dossier où ladite bavette n'est pas mise en contrainte et où ledit deuxième bord définit avec ladite coiffe une fente,
- et une deuxième position correspondant au rabattement dudit dossier où ladite bavette est ouverte par appui dudit dispositif contre elle, à l'encontre de la force de rappel élastique exercée par ladite sous couche, ledit deuxième bord s'écartant pour ouvrir ladite fente.

Dans cette description, les termes de positionnement dans l'espace (haut, inférieur, latéral, avant, horizontal, vertical,...) sont pris en référence au siège disposé dans le véhicule avec son dossier non rabattu.

Avec l'agencement proposé, l'actionnement du dossier en rabattement conduit à une introduction du dispositif d'articulation dans la cavité, la bavette de revêtement s'écartant pour ouvrir la fente et permettre cette introduction.

Lorsque le dossier est relevé, la bavette retrouve sa position naturelle en l'absence de contrainte, sous l'effet de l'élasticité de la sous couche, et la cavité est masquée par la bavette de revêtement, la seule trace de présence de la cavité résidant dans une simple fente dans le coussin, ce qui améliore sensiblement l'esthétique du siège.

Selon d'autres aspects, l'invention propose un coussin d'un tel siège, une coiffe d'un tel coussin et un procédé de réalisation d'un tel coussin.

D'autres particularités et avantages de l'invention apparaîtront dans la description qui suit, faite en référence aux figures jointes dans lesquelles :

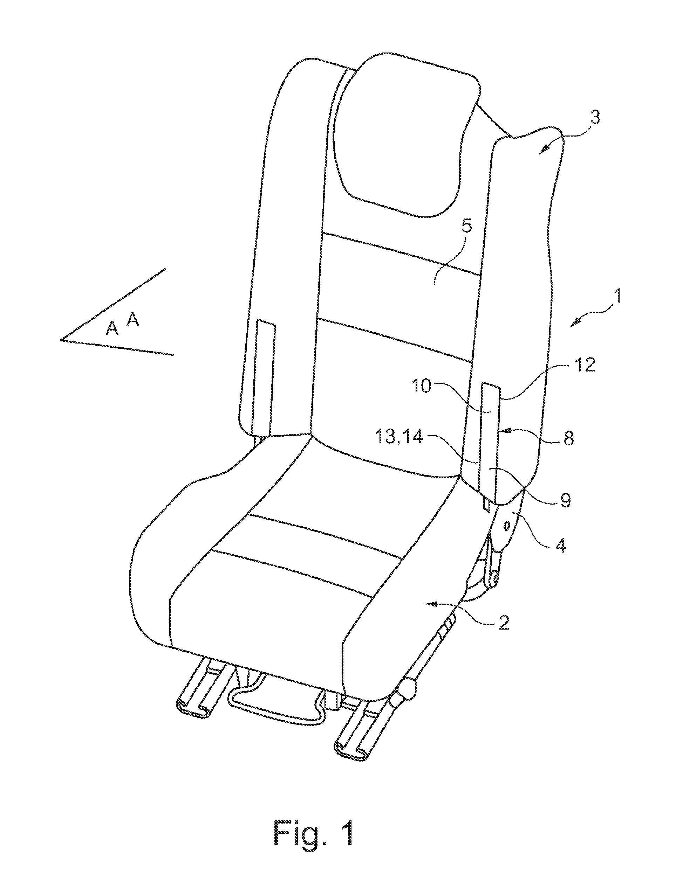

- la figure 1 est une vue en perspective d'un siège selon une réalisation, le dossier étant en position non rabattue,

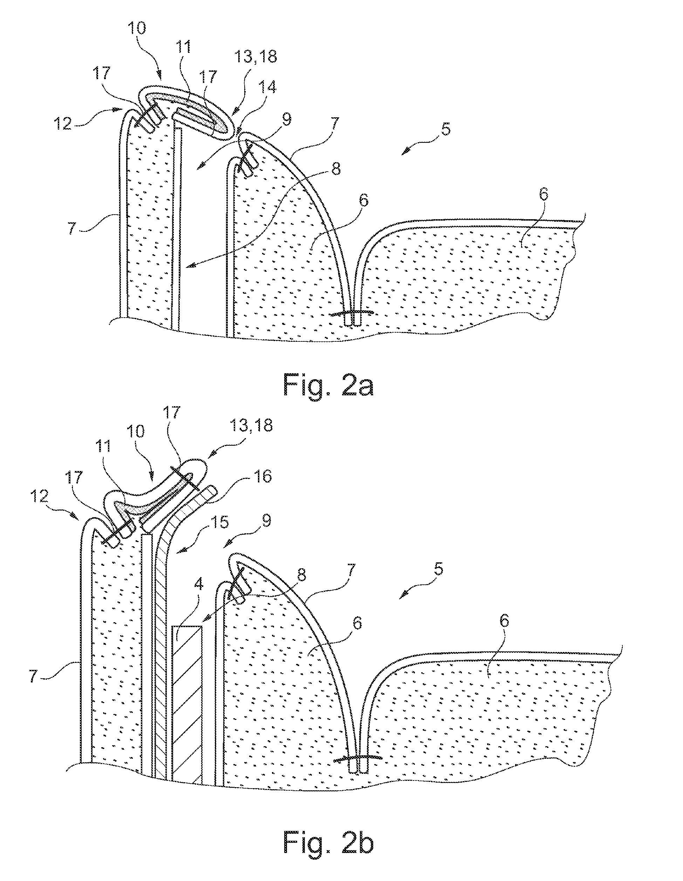

- la figure 2 est coupe schématique partielle d'un siège selon un plan AA (représenté en figure 1), ledit plan étant sensiblement horizontal lorsque le dossier est en position verticale, ledit plan suivant la rotation du dossier, le dossier étant en position non rabattue (2a) et en position rabattue (2b).

En référence aux figures, on décrit un siège 1 de véhicule automobile comprenant une assise 2 et un dossier 3 monté en rotation par un dispositif 4 d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin 5 de garniture, ledit coussin comprenant un bloc 6 de mousse - notamment de polyuréthanne - de rembourrage revêtu d'une coiffe 7 de revêtement, ledit coussin comprenant une cavité 8 latérale inférieure de logement dudit dispositif lorsque ledit dossier est rabattu, ladite cavité étant pourvue d'une ouverture 9 tournée vers l'avant d'introduction dudit dispositif dans ladite cavité lors du rabattement dudit dossier, ladite ouverture étant occultée par une bavette 10 de revêtement pourvue d'une sous couche 11 de matériau élastique, ladite bavette comprenant un premier bord 12 solidaire de ladite coiffe et un deuxième bord 13 opposé, ladite bavette étant mobile entre :
- une première position correspondant au non rabattement dudit dossier où ladite bavette n'est pas mise en contrainte et où ledit deuxième bord définit avec ladite coiffe une fente 14,
- et une deuxième position correspondant au rabattement dudit dossier où ladite bavette est ouverte par appui dudit dispositif contre elle, à l'encontre de la force de rappel élastique exercée par ladite sous couche, ledit deuxième bord s'écartant pour ouvrir ladite fente.

Selon la réalisation représentée, la bavette 10 est issue de matière de la coiffe 7.

La coiffe 5 peut notamment être surmoulée par la mousse du bloc 6, selon le procédé décrit plus loin.

Selon une réalisation, la sous couche 11 est à base de matériau élastomère.

Plus particulièrement, la sous couche 11 peut être sous forme d'une plaque associée, ici par couture 17, en envers de la bavette 10.

Selon la réalisation représentée, le deuxième bord 13 comprend un ourlet 18 maintenu par couture 17, la présence dudit ourlet permettant d'assurer une finition optimale dudit deuxième bord et en outre de renforcer la tenue en flexion de la bavette 10.

De façon non représentée, la sous couche 11 peut être prévue à base de mousse issue de matière du bloc 6 de rembourrage.

Selon la réalisation représentée, le dispositif 4 comprend un carter 15 latéral, ledit carter présentant une bordure 16 dont la géométrie est agencée pour permettre un glissement du deuxième bord 13 de la bavette 10 contre ladite bordure et une ouverture de ladite bavette vers l'extérieur du dossier 3 lors de son rabattement.

Une telle ouverture vers l'extérieur présente l'avantage, par rapport à une ouverture vers l'intérieur, d'une moindre sollicitation de la bavette 10 en pliage et donc d'une meilleure tenue dans le temps.

On décrit à présent un coussin 5 comprenant un bloc 6 de mousse de rembourrage revêtu d'une coiffe 7 de revêtement - ladite coiffe étant notamment surmoulée par la mousse du bloc 6 -, ledit coussin comprenant une cavité 8 latérale inférieure de logement d'un dispositif 4 d'articulation, ladite cavité étant pourvue d'une ouverture 9 tournée vers l'avant d'introduction dudit dispositif dans ladite cavité, ladite ouverture étant occultée par une bavette 10 de revêtement pourvue d'une sous couche 11 de matériau élastique, ladite bavette comprenant un premier bord 12 solidaire de ladite coiffe et un deuxième bord 13 opposé définissant avec ladite coiffe une fente 14 en l'absence de mise en contrainte de ladite bavette.

On décrit à présent une coiffe 7 d'un coussin 5, ladite coiffe comprenant une bavette 10 latérale inférieure de revêtement pourvue d'une sous couche 11 de matériau élastique, ladite bavette comprenant un premier bord 12 solidaire de ladite coiffe et un deuxième bord 13 opposé définissant avec ladite coiffe une fente 14.

Ce dernier cas ne correspond évidemment pas à celui où la sous couche 11 est à base de mousse issue de matière du bloc 6 de rembourrage puisque, dans ce cas, la sous couche 11 est formée lors de la formation du bloc 6.

On décrit à présent un procédé de réalisation d'un coussin 5 comprenant les étapes suivantes :
- confectionner une coiffe 7 comprenant une bavette 10 latérale inférieure de revêtement pourvue d'une sous couche 11 de matériau élastique, ladite bavette comprenant un premier bord 12 solidaire de ladite coiffe et un deuxième bord 13 opposé définissant avec ladite coiffe une fente 14,
- disposer ladite coiffe dans un moule,
- injecter dans ladite coiffe un mélange précurseur de mousse souple, notamment de polyuréthanne, afin de réaliser un surmoulage de ladite coiffe par la mousse,
- après expansion de la mousse, démouler le coussin 5 obtenu.

En variante, il peut être prévu que la sous couche 11 soit formée lors de l'expansion de la mousse, ladite sous couche étant issue de matière de la mousse du bloc 6.

## Revendications

1. Siège (1) de véhicule automobile comprenant une assise (2) et un dossier (3) monté en rotation par un dispositif (4) d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin (5) de garniture, ledit coussin comprenant un bloc (6) de mousse de rembourrage revêtu d'une coiffe (7) de revêtement, ledit siège étant **caractérisé en ce que** ledit coussin comprend une cavité (8) latérale inférieure de logement dudit dispositif lorsque ledit dossier est rabattu, ladite cavité étant pourvue d'une ouverture (9) tournée vers l'avant d'introduction dudit dispositif dans ladite cavité lors du rabattement dudit dossier, ladite ouverture étant occultée par une bavette (10) de revêtement pourvue d'une sous couche (11) de matériau élastique, ladite bavette comprenant un premier bord (12) solidaire de ladite coiffe et un deuxième bord (13) opposé, ladite bavette étant mobile entre :
• une première position correspondant au non rabattement dudit dossier où ladite bavette n'est pas mise en contrainte et où ledit deuxième bord définit avec ladite coiffe une fente (14),
• et une deuxième position correspondant au rabattement dudit dossier où ladite bavette est ouverte par appui dudit dispositif contre elle, à l'encontre de la force de rappel élastique exercée par ladite sous couche, ledit deuxième bord s'écartant pour ouvrir ladite fente.

2. Siège selon la revendication 1, **caractérisé en ce que** la sous couche (11) est à base de matériau élastomère.

3. Siège selon l'une quelconque des revendications 1 ou 2, **caractérisé en ce que** la sous couche (11) est sous forme d'une plaque associée en envers de la bavette (10).

4. Siège selon la revendication 1, **caractérisé en ce que** la sous couche (11) est à base de mousse issue de matière du bloc (6) de rembourrage.

5. Siège selon l'une quelconque des revendications 1 à 4, **caractérisé en ce que** le dispositif (4) comprend un carter (15) latéral, ledit carter présentant une bordure (16) dont la géométrie est agencée pour permettre un glissement du deuxième bord (13) de la bavette (10) contre ladite bordure et une ouverture de ladite bavette vers l'extérieur du dossier (3) lors de son rabattement.

6. Coussin (5) de dossier (3) d'un siège selon l'une quelconque des revendications 1 à 5, comprenant un bloc (6) de mousse de rembourrage revêtu d'une coiffe (7) de revêtement, **caractérisé en ce qu'**il comprend une cavité (8) latérale inférieure de logement d'un dispositif (4) d'articulation, ladite cavité étant pourvue d'une ouverture (9) d'introduction dudit dispositif dans ladite cavité, ladite ouverture étant occultée par une bavette (10) de revêtement pourvue d'une sous couche (11) de matériau élastique, ladite bavette comprenant un premier bord (12) solidaire de ladite coiffe et un deuxième bord (13) opposé définissant avec ladite coiffe une fente (14) en l'absence de mise en contrainte de ladite bavette.

7. Coiffe d'un coussin selon la revendication 6, **caractérisée en ce qu'**elle comprend une bavette (10) latérale inférieure de revêtement pourvue d'une sous couche (11) de matériau élastique, ladite bavette comprenant un premier bord (12) solidaire de ladite coiffe et un deuxième bord (13) opposé définissant avec ladite coiffe une fente (14).

8. Procédé de réalisation d'un coussin selon la revendication 6, **caractérisé en ce qu'**il comprend les étapes suivantes :
• confectionner une coiffe (7) comprenant une bavette (10) latérale inférieure de revêtement pourvue d'une sous couche (11) de matériau élastique, ladite bavette comprenant un premier bord (12) solidaire de ladite coiffe et un deuxième bord (13) opposé définissant avec ladite coiffe une fente (14),
• disposer ladite coiffe dans un moule,
• injecter dans ladite coiffe un mélange précurseur de mousse souple,
• après expansion de la mousse, démouler le coussin (5) obtenu.
